# FASCICULE DE BREVET EUROPEEN

(11) **EP 2 425 309 B1**
(45) Date de publication et mention de la délivrance du brevet: **19.03.2014**
(21) Numéro de dépôt: 10717619.0
(22) Date de dépôt: 27.04.2010
(51) Int. Cl.: G05D 1/06, G05D 1/00

(54) **PROCEDE D'AIDE A LA NAVIGATION POUR LA DETERMINATION DE LA TRAJECTOIRE D'UN AERONEF**
NAVIGATIONSHILFEVERFAHREN ZUR BESTIMMUNG DER BAHN EINES FLUGZEUGS
NAVIGATION ASSISTANCE METHOD FOR DETERMINING THE PATH OF AN AIRCRAFT

(30) Priorité: 28.04.2009 FR 0902066
(43) Date de publication de la demande: 07.03.2012
(73) Titulaire: THALES, 92200 Neuilly-sur-Seine (FR)
(72) Inventeur: BOUNIOL, Pierre, 38840 Saint Hilaire du Rosier (FR); POLAERT, Olivier, 26800 Etoile Sur Rhone (FR); CLEMENCEAU, Pierre-Jérôme, 26120 Chabeuil (FR)
(74) Mandataire: Brunelli, Gérald
(86) Numéro de dépôt international: PCT/EP2010/055641
(87) Numéro de publication internationale: WO 2010/125073

(56) Documents cités:
- WO-A-2008/040658
- US-A- 5 414 631
- US-A1- 2006 253 232
- US-A1- 2008 294 306

## Description

L'invention se situe dans le domaine aéronautique et plus particulièrement dans le domaine des procédés d'aide à la navigation pour la détermination de trajectoire d'un aéronef. On appelle système de navigation, un système se basant sur des équipements pour calculer la position de l'aéronef et transmettre ces informations à un donneur d'ordre qui peut être un pilote ou un système de pilotage automatique.

Habituellement, un aéronef suit un plan de vol prédéterminé comprenant une description détaillée de la trajectoire prédéterminée à suivre dans le cadre d'un vol planifié à l'avance. Il comporte notamment une trajectoire, qui est une séquence chronologique de points de passage décrits par leur position, altitude et instant de passage. On attribue à ces trajectoires des couloirs aériens s'étendant autour de cette route. La taille des couloirs aériens alloués à l'aéronef dépend de la phase du vol (décollage, croisière, approche, atterrissage). Etant donnée la saturation de l'espace aérien, on tend à réduire la taille des couloirs pour ouvrir un plus grand nombre de corridors dans les airs.

Il existe des procédures du type RNP (de l'anglo-saxon "Required Navigation Performance") qui ont pour objet de réduire la taille du couloir aérien alloué à un aéronef, de réduire l'espacement entre les aéronefs et les marges (distances) de franchissement des obstacles. Le grand avantage des procédures RNP est de permettre à un aéronef d'évoluer à destination et en provenance d'endroits difficiles d'accès avec les bonnes garanties en termes de sécurité. Ces procédures permettent en outre de réaliser des approches courbes et de descendre plus bas lors des phases d'approche, pour aller éventuellement détecter, à la fin de la phase d'approche, le système d'atterrissage ou pour que le pilote décide, en fonction de la visibilité, s'il peut faire l'atterrissage.

Dans ces procédures de type RNP, un volume aérien est attribué à l'aéronef pour chaque phase de vol. Pour évoluer à l'intérieur des espaces aériens définis dans une procédure RNP, le système de navigation de l'aéronef doit être capable de surveiller ses performances et de les comparer à une limite d'alarme définie pour la phase d'approche. Le système de navigation doit en outre être apte à informer l'équipage ou le système de pilotage automatique si ses performances atteignent la limite d'alarme. Cela permet au donneur d'ordre de garantir un niveau de sécurité sur la phase d'approche ou d'être conscient que le niveau de sécurité n'est pas garanti.

L'une des performances clé d'un système de navigation est son intégrité. L'intégrité est la capacité d'un système à prévenir lorsque ses performances se dégradent au delà d'un seul prédéfini.

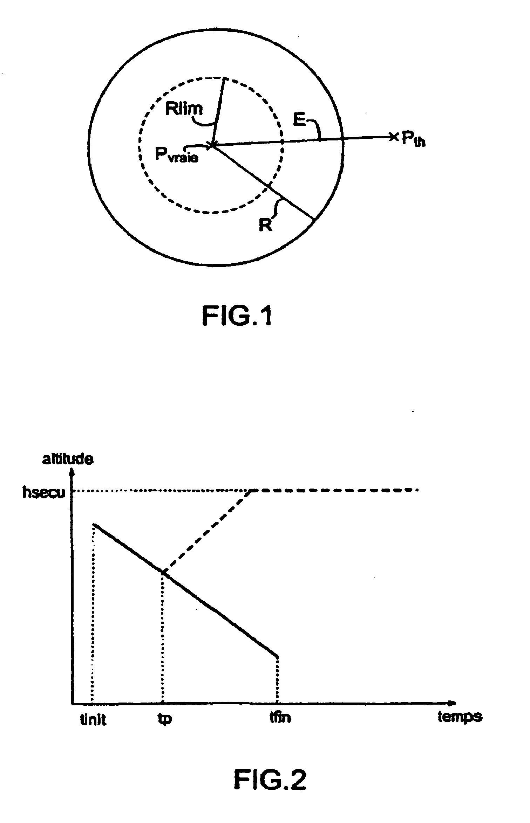

Pour quantifier l'intégrité d'une mesure de position dans les applications aéronautiques, où l'intégrité est critique, on utilise un paramètre appelé "rayon de protection" de la mesure de position ainsi qu'une probabilité de détection associée (c'est-à-dire un niveau d'intégrité donné). Par définition, la probabilité que l'erreur de position dépasse le rayon de protection annoncé sans qu'une alarme soit envoyée est inférieure à cette valeur de probabilité. Par exemple, sur la figure 1 on a représenté un rayon de protection R pour une procédure RNP 0,1. Pour suivre une procédure RNP 0,1, il faut que la probabilité que l'erreur E de trajectoire, dans la direction horizontale, dépasse 0,2 milles nautiques (soit, 0,2N) sans qu'une alarme ne soit envoyée au donneur d'ordre, soit inférieure à 10⁻⁵ par heure. L'erreur de position E est la distance entre la position vraie Pᵥᵣₐᵢₑ et la position théorique voulue Pₜₕ. On définit donc, pour cette procédure, une limite d'alarme Rlim qui est égale à 0,2 Nautiques. Si un rayon de protection R(t) calculé par le système de navigation, pour une probabilité d'apparition d'erreur inférieure ou égale à 10⁻⁵ par heure, dépasse la limite d'alarme Rlim, le donneur d'ordre en est informé. On notera qu'un mille nautique est égal à 1 852 mètres.

A cet effet, habituellement, dans les procédures de type RNP, les systèmes de navigation calculent en permanence la position de l'aéronef et la valeur des rayons de protection horizontaux et/ou verticaux associés à cette position, pour un niveau d'intégrité donné.

Pour suivre des procédures RNP, les aéronefs peuvent être équipés de systèmes de navigation du type INS/GNSS (de l'anglo saxon "Inertial Navigation System" et "Global Navigation Satellite System"). Les systèmes de navigation du type INS/GNSS comprennent au moins une centrale inertielle (senseurs inertiels et calculateur associé) et un récepteur d'informations satellites. Ces systèmes se basent sur des informations satellites et/ou des informations inertielles pour déterminer les positions successives de l'aéronef. Les informations provenant des satellites permettent de fournir des mesures de position précises avec un bon niveau d'intégrité (faible rayon de protection pour une faible probabilité d'erreur). Par contre, l'information de navigation par satellites est susceptible d'être perdue. On dit que l'information de navigation par satellites est perdue lorsque l'information de navigation par satellites est insuffisante pour que le système de navigation calcule la position de l'aéronef à partir de l'information provenant des satellites visibles. C'est par exemple le cas lorsque le récepteur de position des informations satellite est défectueux ou lorsque certains satellites sont cachés par des obstacles et que le récepteur voit moins de 4 satellites ou lorsque le récepteur voit plus de 4 satellites mais qu'ils sont dans une configuration qui ne permet pas de calculer la position de l'aéronef (par exemple, lorsque tous les satellites visibles sont alignés).

Les informations provenant des centrales inertielles permettent quant à elles de fournir constamment des mesures de position mais ces mesures dérivent à long terme. Généralement, le système de navigation calcule la position de l'aéronef à partir des informations satellites et, lorsque l'information de navigation par satellites est perdue, les calculs de position sont effectués à partir des informations inertielles.

De la demande de brevet WO2008/040658, on connaît un système de navigation permettant de suivre des procédures RNP. Le système de navigation est un système hybride du type INS/GNSS hybridé en boucle fermée. L'hybridation consiste à combiner mathématiquement les informations de position et de vitesse fournies par la centrale inertielle et les mesures fournies par un récepteur de positionnement par satellites pour obtenir les mesures de position en tirant les avantages des deux systèmes à savoir la continuité des informations fournies par un récepteur inertiel et la précision des informations fournies par les satellites. Ce système de navigation corrige constamment la dérive des informations inertielles en se basant sur les informations provenant des satellites. Ce système de navigation est apte à surveiller en permanence ses performances en calculant des rayons de protection horizontaux et verticaux pour un niveau d'intégrité donné et à comparer ces rayons de protection à une limite d'alarme définie sur la phase de vol en cours.

Sur chaque phase d'approche est définie une altitude de décision (de l'anglo saxon Decision Altitude DA, définie par rapport au niveau moyen de la mer), ou une hauteur de décision (Decision Height DH, définie en relatif par rapport au seuil de la piste visée) qui est l'altitude ou hauteur à laquelle se trouve l'aéronef à la fin de la procédure d'approche et à laquelle le pilote va décider de commencer la phase d'atterrissage ou non. Cette hauteur dépend du type d'approche (approche de non précision, approche de précision) et du moyen d'approche choisi (à vue ou aux instruments.) Pour chaque aéroport, on définit une altitude de sécurité (de l'anglo saxon MSA : "minimum safety altitude") qui est l'altitude que doit rejoindre un aéronef pour être assuré de ne pas se heurter à un relief, c'est-à-dire pour garantir sa sécurité. L'altitude de sécurité est conditionnée par le relief se situant dans le voisinage de la piste sur laquelle l'atterrissage est projeté. Actuellement, lorsqu'un aéronef qui suit une phase d'approche du type RNP perd l'information de navigation par satellites le donneur d'ordre en est informé et décide alors, soit de poursuivre la phase de vol en cours, mais sans garantir le niveau de sécurité imposé sur la phase d'approche, soit d'arrêter la phase de vol en cours en s'extrayant instantanément de la trajectoire prédéterminée pour rejoindre l'altitude de sécurité.

Par exemple, si sur une trajectoire prédéterminée, représentée en trait continu épais sur la figure 2, suivie lors d'une phase d'approche en procédure RNP, un aéronef comprenant un système de navigation se basant sur des informations satellites et inertielles, perd l'information de navigation par satellites à un instant de perte tp, le donneur d'ordre est alerté de la perte d'information et il interrompt instantanément sa trajectoire initiale pour rejoindre une altitude de sécurité hsécu en suivant une trajectoire appelée trajectoire d'extraction, représentée en traits pointillés épais. Lorsque l'aéronef a rejoint l'altitude de sécurité il va, soit tenter une nouvelle procédure d'approche, soit abandonner l'approche en cours pour rejoindre une troisième trajectoire.

Or, ce type de procédé présente l'inconvénient d'interrompre l'approche en cours lorsque l'information de navigation par satellites n'est plus disponible, même si le système de navigation aurait finalement pu garantir, grâce à l'hybridation, les conditions de sécurité exigées sur la phase d'approche jusqu'à la fin de cette phase. Par ailleurs, si l'approche en cours n'est pas interrompue, les conditions de sécurité ne sont plus garanties. Cela allonge la durée des vols et induit des coûts supplémentaires en termes de carburant, de rémunération du personnel de bord et de saturation de l'espace aérien.

De la demande de brevet US 5, 414, 631 on connaît un dispositif pour éviter les collisions entre un aéronef et le sol qui utilise une base de données contenant une description d'altitudes de sécurité en fonction de la position géographique de l'aéronef. Ce dispositif compare l'altitude prédite de l'aéronef avec un plancher qui est supérieur ou égal à l'altitude de sécurité à une position géographique donnée.

De la demande de brevet US 2006/253232, on connaît un procédé d'élaboration d'une trajectoire d'approche du type RNP comprenant une étape de détermination d'une altitude à laquelle une procédure d'échappement (de l'anglo-saxon "missed approach") doit être initiée si des conditions de visibilité ne sont pas suffisantes pour continuer l'approche.

Le document US2008/294306 décrit un procédé selon le préambule de la première revendication.

Le but de la présente invention est de remédier aux inconvénients précités.

A cet effet, l'invention a pour objet un procédé d'aide à la navigation pour la détermination, par un donneur d'ordre, de la trajectoire d'un aéronef suivant initialement une trajectoire prédéterminée dans une phase d'approche et sur laquelle sont définies une altitude de sécurité et une limite d'alarme, ledit aéronef comprenant un système de navigation du type INS/GNSS comprenant un récepteur de navigation par satellites et au moins une centrale inertielle, ledit système de navigation étant apte à déterminer, à un instant de calcul, la position de l'aéronef, à calculer un rayon de protection associé et à le comparer à la limite d'alarme, ledit procédé étant caractérisé en ce qu'il comporte les étapes suivantes :
- on détermine une trajectoire à venir,
- on estime des rayons de protection prédits sur la trajectoire à venir débutant à l'instant de calcul dans le cas d'une situation critique, en termes d'informations de position, qui débuterait à l'instant de calcul,
- on calcule un instant limite à partir duquel le rayon de protection prédit est supérieur ou égal à la limite d'alarme,
- on calcule un instant limite d'extraction qui correspond à l'instant maximum auquel l'aéronef doit quitter la trajectoire prédéterminée pour pouvoir atteindre l'altitude de sécurité à l'instant limite.

Le procédé selon l'invention peut présenter en outre, une ou plusieurs des caractéristiques suivantes prises ensemble ou séparément :
- on transmet la valeur de l'instant limite au donneur d'ordre,
- on transmet la valeur de l'instant limite d'extraction au donneur d'ordre,
- les rayons de protection prédits sur la trajectoire à venir sont prédéterminés,
- les rayons de protection prédits sur la trajectoire à venir sont calculés à l'instant donné,
- la situation critique est une situation dans laquelle l'information de navigation par satellites est perdue à partir de l'instant de calcul,
- on estime les rayons de protection prédits par propagation des erreurs inertielles sur la trajectoire à venir,
- la trajectoire à venir est la portion restante de la trajectoire prédéterminée à l'instant de calcul,
- la trajectoire à venir est la trajectoire, débutant à l'instant de calcul, la plus contraignante pour la situation critique considérée,
- les rayons de protection prédits sont calculés à partir de rayons de protection horizontaux prédits et/ou verticaux prédits sur la trajectoire à venir,
- la limite d'alarme est calculée pour un premier niveau d'intégrité, les rayons de protection sont calculés pour un second niveau d'intégrité, les rayons de protection prédits sont calculés pour un troisième niveau d'intégrité et en ce que le second niveau d'intégrité est au moins égal au premier niveau d'intégrité et le.troisième niveau d'intégrité est soit égal au premier niveau d'intégrité, soit égal au second niveau d'intégrité, soit dépendant de l'intégrité liée à la situation critique considérée,
- le système de navigation est du type hybride,
- le donneur d'ordre est un pilote ou un système de pilotage automatique.

L'invention a également pour objet un système de navigation apte à mettre en oeuvre le procédé selon l'invention et un aéronef équipé d'un tel système de navigation.

Le procédé d'aide à la navigation selon l'invention présente l'avantage de limiter les occurrences de procédures d'extraction en cas de perte de l'information de navigation par satellites. Ceci permet de réduire la saturation de l'espace aérien et de limiter les coûts et la durée des vols.

En effet, on peut éviter une procédure d'extraction lorsque l'aéronef peut terminer la phase d'approche dans laquelle il est engagé avec le niveau de sécurité requis alors même qu'une partie de l'information sur lequel se base le système de navigation est perdue. Il en est de même lorsque le système de navigation retrouve cette information avant que les performances du système de navigation n'atteignent la limite d'alarme. C'est par exemple le cas lorsque l'information revient d'elle-même (brouillage du récepteur terminé, obstacle à la vue d'un satellite dépassé, panne furtive) ou lorsque le personnel de bord répare la panne affectant le système de navigation avant que la limite d'alarme ne soit atteinte.

Ce procédé présente en outre l'avantage de laisser une marge de temps supplémentaire au pilote ou au système de pilotage automatique pour décider de suivre une procédure d'extraction ou de poursuivre la trajectoire initiale avec des performances dégradées.

D'autres caractéristiques et avantages de l'invention apparaîtront à la lecture de la description détaillée qui suit, faite à titre d'exemple non limitatif et en référence aux dessins annexés dans lesquels :
- la figure 1, déjà décrite, représente schématiquement un rayon de protection pour une position mesurée à un instant donné, l'erreur de position entre la position mesurée et la position vraie ainsi qu'une limite d'alarme dans une procédure RNP0,1,
- la figure 2, déjà décrite, représente l'évolution, en fonction du temps, de l'altitude d'un aéronef suivant une trajectoire initiale pendant une phase d'approche ainsi que l'évolution de l'altitude, en fonction du temps, sur une trajectoire d'extraction,
- la figure 3a représente, en trait continu, la variation de l'altitude d'un aéronef en fonction du temps sur une trajectoire d'approche prédéterminée et, en traits pointillés, sur une trajectoire d'extraction,
- la figure 3b représente une vue de dessus de la trajectoire d'un aéronef en fonction du temps sur une trajectoire d'approche prédéterminée,
- la figure 4 représente l'évolution, en traits pointillés, l'estimation d'un rayon de protection en-fonction du temps ainsi, qu'en trait continu, une limite d'alarme définie sur la phase d'approche représentée sur les figures 3a et 3b.

D'une figure à l'autre, les mêmes éléments sont repérés par les mêmes références.

On va maintenant décrire le procédé d'aide à la navigation pour déterminer la trajectoire d'un aéronef lors d'une phase d'approche, ledit aéronef suivant initialement une trajectoire prédéterminée sur la phase d'approche.

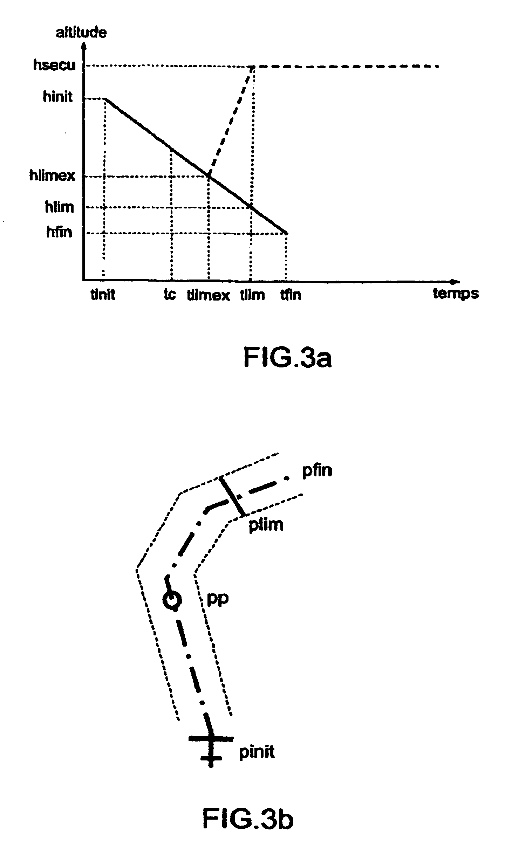

Sur la figure 3a, on a représenté, en trait continu, la variation de l'altitude d'un aéronef en fonction du temps sur une trajectoire d'approche prédéterminée. Sur la figure 3b, on a représenté une vue de dessus de la trajectoire d'approche d'un aéronef en fonction du temps sur une trajectoire d'approche prédéterminée.

Comme visible la figure 3a, la phase d'approche s'étend entre un instant initial tinit et un instant final tfin, l'instant final tfin correspondant au début de la phase d'atterrissage, non représentée.

L'instant initial et l'instant final sont associés à une position initiale pinit sur la trajectoire de l'aéronef et respectivement une position finale pfin, comme visible sur la figure 3b. La position initiale et la position finale ont respectivement une altitude initiale hinit et une altitude finale hfin, comme visible sur la figure 3a. Dans la suite de la description, par altitude, on entend l'altitude de l'aéronef par rapport au niveau moyen de la mer. L'altitude de sécurité représentera donc l'altitude de décision. En variante, on peut définir l'altitude de l'aéronef par rapport au seuil de la piste visée. L'altitude de sécurité représenterait la hauteur de décision.

Dans cette phase, l'aéronef suit une trajectoire prédéterminée, aussi appelée trajectoire initiale, représentée en trait épais sur les figures 3a et 3b, entre un point initial et un point final c'est-à-dire que toutes les positions de l'aéronef ainsi que l'instant de passage de l'aéronef à ces positions sont prédéfinies entre l'instant initial et l'instant final.

Classiquement, sont définies sur la phase d'approche en cours, une limite d'alarme Rlim(t) qui correspond à un rayon de protection limite ainsi qu'une altitude de sécurité hsécu. La limite d'alarme est classiquement calculée pour un premier niveau d'intégrité donné. Pour une procédure RNP, le premier niveau d'intégrité correspond à une probabilité d'erreur sans qu'une alarme soit envoyée inférieure à 10⁻⁵ par heure.

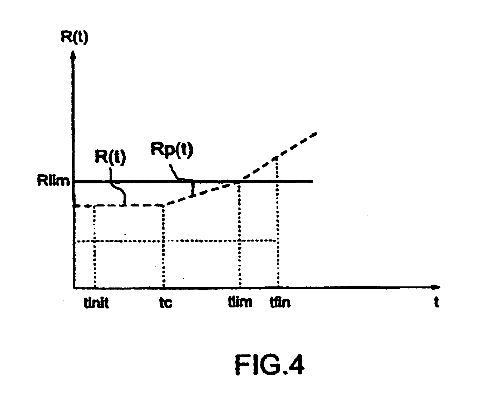

La limite d'alarme est, soit constante sur la trajectoire (comme représenté sur la figure 4 qui sera décrite ultérieurement), soit variable en fonction de la position sur la trajectoire, c'est-à-dire en fonction du temps. On comprend aisément que le niveau de sécurité exigé à basse altitude soit plus important qu'à haute altitude, autrement dit, que le rayon de protection limite soit plus faible à basse altitude.

Classiquement, l'aéronef est équipé d'un système de navigation du type INS/GNSS, comprenant une ou plusieurs centrales inertielles et un récepteur d'informations satellites et apte à se baser sur des informations satellites et/ou sur des informations inertielles pour calculer les positions successives occupées par l'aéronef. Le système de navigation est aussi apte à surveiller ses performances en associant à une mesure de position calculée à un instant donné, un rayon de protection déterminé pour un deuxième niveau d'intégrité donné pouvant être différent du premier niveau d'intégrité. De préférence, le niveau d'intégrité sur lequel on se base pour calculer le rayon de protection est au moins égal au niveau d'intégrité sur la base duquel est calculée la limite d'alarme. Autrement dit, pour le calcul du rayon de protection, on se base sur une probabilité d'apparition d'erreur, sans qu'une alarme ne soit envoyée, inférieure ou égale à la probabilité d'apparition d'erreur utilisée pour le calcul de la limite d'alarme. Classiquement, le second niveau d'intégrité correspond à une probabilité d'apparition d'erreur sans qu'une alarme soit envoyée égale à 10⁻⁷ par heure.

Le système de navigation est apte à comparer les rayons de protection calculés à la limite d'alarme définie sur la phase d'approche en cours. Avantageusement, le système de navigation est apte à alerter le système de navigation lorsqu'à un instant donné, ses performances sont moins bonnes que le premier niveau de performance.

Classiquement, on calcule à un instant de calcul tc un rayon de protection horizontal Rh(tc) et/ou un rayon de protection vertical Rv(tc) associés à la valeur de la position calculée à ce même instant, pour un deuxième niveau d'intégrité donné. On définit un rayon de protection R(tc) dépendant du rayon de protection horizontal Rh(tc) et/ou du rayon de protection vertical Rv(tc). Le système de navigation est apte à comparer le rayon de protection R(tc) à la limite d'alarme Rlim(tc).

Le rayon de protection peut dépendre de préférence du rayon de protection vertical lorsque l'on souhaite atterrir et avoir des mesures de position performantes dans la direction verticale. Le rayon de protection peut être préférentiellement défini en fonction du rayon de protection horizontal, lorsque l'on souhaite passer dans une zone contrainte dans la direction horizontale (par exemple entre deux montagnes.) Le rayon de protection peut également dépendre d'une combinaison entre un rayon horizontal et un rayon de vertical. Dans la combinaison, on pondère les rayons de protection horizontaux et verticaux en fonction de la géographie du lieu.

Les performances du système de navigation sont calculées par le système de navigation lui-même. Le système de navigation est, par exemple, un système de positionnement basé sur un système hybride du type INS / GNSS comme celui décrit dans la demande de brevet WO2008/04065

Plus précisément, ce système de navigation comprend un système de positionnement comprenant :
- un récepteur de navigation par satellites recevant des signaux d'une constellation de N satellites visibles poursuivis,
- une centrale inertielle comprenant une unité de mesure inertielle délivrant des incréments d'angle et des incréments de vitesse et une plate-forme virtuelle recevant les incréments d'angle et les incréments de vitesse;
- un module barométrique délivrant des mesures d'altitude barométrique,
- un filtre de Kalman d'hybridation,
- un banc de N filtres secondaires,
- un module de calcul.

L'unité de mesure inertielle comporte des gyromètres et des accéléromètres: les incréments d'angle sont délivrés à l'aide des gyromètres et les incréments de vitesse sont délivrés à partir d'informations accélérométriques.

La plate-forme virtuelle, produit des points de positionnement et de vitesse inertiels, PPVI. Le récepteur de navigation par satellites, GNSS délivre des mesures brutes de signaux émis par les satellites, i désignant un indice de satellite et étant compris entre 1 et N envoyées au filtre de Kalman d'hybridation.

Le filtre de Kalman d'hybridation estime les erreurs réalisées sur les positions inertielles PPVI, il produit :
- un vecteur d'état VE correspondant aux erreurs du système hybride, obtenue en observant les écarts entre les points de positionnement et de vitesse inertiels PPVI et les mesures brutes correspondantes ;
- une matrice de variance/covariance, MHYP de l'erreur faite sur l'estimation du vecteur d'état VE.
- une correction hybride qui comporte une estimation du vecteur d'état VE.

L'agencement et les fonctions du filtre de Kalman et des filtres secondaires sont décrits dans la demande de brevet WO2008040658. La sortie hybride du système de navigation correspond aux points de positionnement et de vitesse inertiels PPVI qui sont les positions et vitesses mesurées par le système de navigation.

Le module de calcul reçoit les paramètres hybrides et la matrice de variance/covariance et détermine des valeurs de protection de position hybride à partir de la position hybride contenue dans le vecteur d'état comme cela est décrit dans la demande de brevet WO2008040658. Ces calculs sont résumés ci-après. On décrira uniquement le calcul d'un rayon de protection de position hybride horizontal. Le calcul d'un rayon de protection de position hybride vertical est similaire.

On évalue un premier rayon de protection Rh_{H0} auxiliaire en l'absence de panne de satellite, hypothèse communément désignée H₀. C'est l'hypothèse selon laquelle aucune des mesures brutes n'est erronée.

Le premier rayon de protection auxiliaire Rh_{H0} est lié directement à la variance de la vitesse et à la probabilité Pₙᵢ que cette erreur dépasse le rayon de protection. C'est le coefficient de la diagonale de la matrice de variance/covariance P qui correspond à la position mesurée. L'écart type σ est la racine carrée de cette variance et se déduit donc de la matrice P du filtre d'hybridation. On détermine un rayon de protection horizontal auxiliaire sous l'hypothèse dite H1 selon laquelle une des mesures brutes MBi (provenant d'un satellite i) est erronée. On détermine le rayon de protection horizontal de position hybride comme un maximum des rayons de protection auxiliaires horizontaux. La détermination du maximum est fondée sur la détermination d'un cercle enveloppant une ellipse de confiance dans un plan horizontal. L'ellipse de confiance est déterminée à partir de la matrice de variance/covariance de la position hybride et d'une valeur de probabilité recherchée.

Avantageusement, la détermination du rayon de protection horizontal auxiliaire est fondée sur une valeur de probabilité de fausse alarme souhaitée et sur une valeur de probabilité de détection manquée souhaitée. Avantageusement, la détermination du rayon de protection horizontal auxiliaire Rh_{HO} est fondée sur une valeur de probabilité de détection manquée souhaitée et sur une valeur de probabilité d'occurrence d'un défaut satellite non détecté.

Dans le procédé d'aide à la navigation selon l'invention, le système de navigation estime ce que seraient les performances du système de navigation, pour un troisième niveau d'intégrité donné, sur une trajectoire à venir débutant à l'instant donné de calcul tc (correspondant à l'instant courant), dans une situation critique en termes d'informations de position, ladite situation débutant à l'instant de calcul. On appelle informations de position, les informations produites par les récepteurs d'informations satellites et /ou inertielles.

Par situation critique, on entend une situation dans laquelle une partie de l'information sur laquelle se base le système de navigation pour calculer la position de l'aéronef est perdue à partir de l'instant de calcul tc. Dans une telle situation les performances du système se dégraderaient de façon importante sur la trajectoire à venir (c'est-à-dire que le rayon de protection augmenterait pour un niveau d'intégrité donné). La situation critique dans laquelle on se place pour effectuer les calculs de prédictions est choisie, soit au moment du calcul de prédiction, soit avant le vol (elle est alors prédéterminée.)

La situation critique est par exemple une situation dans laquelle l'information de navigation par satellites est perdue à partir de l'instant de calcul tc. En effet, c'est l'information de navigation par satellites qui apporte la précision et l'intégrité aux mesures de positions effectuées par un système de navigation du type INS/GNSS. Or, lorsque l'information de navigation par satellites est perdue, le système de navigation calcule les positions de l'aéronef sur la base de l'information inertielle qui dérive. C'est donc lorsque l'information de navigation par satellites est perdue que les performances du système de navigation pour le calcul de position se dégradent le plus vite.

La trajectoire à venir est la portion de la trajectoire initiale à venir, c'est-à-dire la portion restante de la trajectoire prédéterminée à l'instant tc. En variante, la trajectoire à venir est la trajectoire la plus contraignante correspondant à la situation critique, c'est-à-dire la trajectoire sur laquelle les performances du système de navigation, se basant sur l'information restante pour calculer les rayons de protection, chutent le plus rapidement. Par exemple, lorsque la situation critique est la situation dans laquelle l'information de navigation par satellites est perdue, la trajectoire sur laquelle les performances du système de navigation, se basant uniquement sur l'information inertielle pour calculer la position de l'aéronef, diminuent le plus rapidement est un demi-tour débutant à l'instant de calcul tc. Cette variante permet d'estimer les pires dégradations à venir des performances du système de navigation dans la situation critique considérée.

Les estimations des performances du système de navigation sur la trajectoire à venir, débutant à l'instant donné tc, sont exprimées au moyen de rayons de protection prédits Rp(t) pour un troisième niveau d'intégrité donné. Les rayons de protection prédits Rp(t) sont prédéterminés sur la trajectoire à venir. Des tables comprenant la variation du rayon de protection en fonction du temps dans le cas d'une situation critique, sur une trajectoire à venir, sont mises à disposition du système de navigation.

En variante, les rayons de protection prédits Rp(t) sont calculés par prédiction, à un instant de calcul tc, pour un troisième niveau d'intégrité. Avantageusement, les rayons de protection prédits sont calculés par prédiction en permanence, c'est-à-dire à chaque instant de calcul. Les instants de calculs sont régulièrement répartis sur la durée de la trajectoire et espacés les uns des autres d'un intervalle de temps dt.

Par exemple, les rayons de protection prédits Rp(t) sont calculés par propagation des erreurs inertielles sur la trajectoire à venir. Plus précisément, connaissant la trajectoire à venir, on prend les points de position et les rayons de protection R(tc- dt) calculés, à l'instant tc-dt précédant l'instant de calcul tc au moyen du système de positionnement hybride INS/GNSS décrit ci-dessus et on propage les erreurs inertielles le long de la trajectoire à venir. Par exemple, dans le cas d'un système de navigation du type hybride INS /GNSS, on calcule des positions estimées Pp(t) sur la trajectoire à venir. A cet effet, on fournit au filtre de Kalman d'hybridation, à partir de l'instant de calcul, les points de positionnement sur la trajectoire à venir en lieu et place des points de positionnement inertiels PPVI. Dans ce cas, le filtre de Kalman ne reçoit pas non plus d'information de navigation par satellites en entrée. Le filtre de Kalman d'hybridation calcule des positions prédites Pp(t) à la place de points de positionnement inertiels PPVI et des matrices de variance/ covariance prédites des erreurs de position horizontales et verticales sur la trajectoire à venir. Des rayons de protection horizontaux prédits Rph(t) et verticaux prédits Rpv(t) sont calculés à partir des matrices de variance/ covariance prédites des erreurs de position horizontales et verticales sur la trajectoire à venir de la même manière que sont calculés les rayons de protection horizontaux et/ou verticaux à partir des matrices de variance/ covariance des erreurs de position horizontales et verticales. Les rayons de protection prédits Rp(t) sont calculés à partir des rayons de protection horizontaux et/ou verticaux prédits. Les estimations des rayons de protection prédits sur la trajectoire à venir sont réalisées pour un troisième niveau d'intégrité.

Le troisième niveau d'intégrité est soit égal au second niveau d'intégrité, soit égal au premier niveau d'intégrité, soit égal à un niveau d'intégrité dépendant de la situation critique considérée. Par exemple, la probabilité que l'information de navigation par satellites soit perdue est égale à 10⁻⁴ par heure. Au lieu de calculer le rayon de protection pour une probabilité d'erreur égale à 10⁻⁷ par heure (second niveau d'intégrité) on peut donc calculer le rayon de protection pour une probabilité d'erreur égale à 10⁻³ par heure, en effet la probabilité de la panne d'information n'est plus à prendre en considération puisqu'elle est déjà effective et la probabilité d'avoir une seconde panne satellite est égale à 10⁻⁸ par heure, donc en dessous des exigences émises par les autorités aéronautiques. A partir des estimations des performances à venir du système de navigation sur une trajectoire à venir dans une situation critique, on détermine un instant limite tlim. L'instant limite tlim est l'instant à partir duquel le rayon de protection est supérieur ou égal à la limite d'alarme. Au temps limite tlim, on associe la position prévue de l'aéronef sur la trajectoire prédéfinie à la position limite plim, dont l'altitude est l'altitude limite hlim.

Sur la figure 4, on a représenté un exemple d'évolution, en fonction du temps, du rayon de protection R(t), sur la trajectoire à venir, avant l'instant de calcul tc ainsi que l'évolution, en fonction du temps, du rayon de protection prédit Rp(t) après l'instant de calcul tc, les estimations de ce rayon de protection étant calculées à l'instant tc. On a en outre représenté sur cette figure l'évolution en fonction du temps de la limite d'alarme Rlim sur la trajectoire à venir. L'instant limite tlim est l'instant auquel le rayon de protection prédit Rp(tlim) est égal à la limite d'alarme Rlim(tlim).

Le système de navigation fournit la valeur de l'instant limite au donneur d'ordre. Cette information est mise à disposition du pilote, par exemple, au moyen d'une interface visuelle ou sonore ou bien elle est fournie comme une donnée d'entrée à un calculateur d'un système de navigation. L'instant limite est calculé à chaque instant de calcul de la position par le système de navigation. Le donneur d'ordre dispose donc à chaque instant de la valeur de l'instant limite à cet instant.

Si à un instant donné, le donneur d'ordre est informé que l'information de navigation par satellites est perdue, il peut prendre connaissance de la valeur de l'instant limite et savoir s'il peut terminer la phase d'approche en garantissant le niveau de sécurité exigé sur celle-ci (lorsque l'instant limite est postérieur à l'instant final) ou s'il ne pourra pas garantir le niveau de sécurité exigé jusqu'à la fin de la phase d'approche (lorsque l'instant limite est antérieur à l'instant final). Il sait en outre jusqu'à quel stade de la phase d'approche il pourra garantir le niveau de sécurité. Le donneur d'ordre, ayant connaissance du temps limite, n'est pas obligé de quitter la trajectoire initiale pour rejoindre une altitude de sécurité lorsque l'information de navigation par satellites est perdue.

Avantageusement, on calcule un instant limite d'extraction tlimex correspondant à une position limite d'extraction plimex et à une altitude limite d'extraction hlimex sur la trajectoire initiale. L'aéronef doit quitter la trajectoire prédéfinie au plus tard à l'instant limite d'extraction pour atteindre l'altitude de sécurité à l'instant limite tlim. L'instant limite d'extraction dépend de l'instant donné de calcul, de l'altitude de l'aéronef à l'instant donné, de l'altitude de sécurité, et de la vitesse maximale de montée de l'aéronef.

La vitesse maximale de montée de l'aéronef dépend du plan de vol horizontal, de la dynamique de l'avion et/ou des conditions de vitesse de montée imposées entre ces deux instants. Le plan de vol horizontal est la projection sur le sol du plan de vol. Le plan de vol horizontal dépend du relief, des conditions de vitesse imposées sur cette trajectoire et/ou de la dynamique de l'avion.

Pour calculer le temps limite d'extraction, on trace, comme visible en traits pointillés épais sur la figure 3a, une droite, dans le plan vertical. Cette droite passe par un point dont les coordonnées sont l'altitude de sécurité et le temps limite et dont la pente est égale à la vitesse maximale de montée de l'avion. La vitesse de montée est égale à la variation d'altitude par seconde. Cette droite croise la trajectoire initiale en un point correspondant à l'altitude limite d'extraction hlimex et au temps limite d'extraction tlimex.

Il est possible d'affiner la valeur de l'instant limite d'extraction en incluant dans le calcul de cet instant, le temps de faire la manoeuvre de mise en montée ainsi que des variations possibles de vitesse dans la direction verticale.

Le second niveau de sécurité exigé à cette altitude de sécurité est moins important que sur la trajectoire initiale.

On transmet ensuite la valeur de l'instant limite d'extraction au donneur d'ordre. Si à un instant donné, le donneur d'ordre est informé que l'information de navigation par satellites est perdue, il sait à quel instant il devra quitter la trajectoire initiale pour rejoindre l'altitude de sécurité en toute sécurité. Il peut choisir, soit de continuer la trajectoire initiale jusqu'à cet instant en attendant que l'information revienne, soit de quitter la trajectoire initiale avant l'instant limite d'extraction, soit de continuer la trajectoire d'extraction après l'instant limite d'extraction en sachant qu'il ne pourra pas avoir rejoint l'altitude de sécurité à l'instant limite.

En variante, on calcule l'instant limite d'extraction uniquement lorsque l'instant limite est postérieur à l'instant final.

Le donneur d'ordre est, par exemple, le pilote ou un système de pilotage automatique.

Dans la demande de brevet on a décrit le cas où on calcule l'instant limite à chaque instant donné de calcul de position sur toute la trajectoire d'approche. En variante, on calcule l'instant limite à chaque instant de calcul de la position, uniquement à partir du moment où l'altitude de l'aéronef sur la trajectoire d'extraction est inférieure à l'altitude de sécurité.

## Revendications

1. Procédé d'aide à la navigation pour la détermination, par un donneur d'ordre, de la trajectoire d'un aéronef suivant initialement une trajectoire prédéterminée dans une phase d'approche et sur laquelle sont définies une altitude de sécurité (hsécu) et une limite d'alarme (Rlim(t)), ledit aéronef comprenant un système de navigation du type INS/GNSS comprenant un récepteur de navigation par satellites et au moins une centrale inertielle, ledit procédé comprenant les étapes suivantes :
- on détermine une trajectoire à venir,
- on estime des rayons de protection prédits (Rp(t)) sur la trajectoire à venir débutant à l'instant de calcul (tc) dans le cas d'une situation critique, en termes d'informations de position, qui débuterait à l'instant de calcul (tc),
**caractérisé en ce que** ledit procédé comprend en outre les étapes suivantes :
- on calcule un instant limite (tlim) à partir duquel le rayon de protection prédit (Rp(t)) est supérieur ou égal à la limite d'alarme (Rlim(t)),
- on calcule un instant limite d'extraction (tlimex) qui correspond à l'instant maximum auquel l'aéronef doit quitter la trajectoire prédéterminée pour pouvoir atteindre l'altitude de sécurité (hsécu) à l'instant limite (tlim).

2. Procédé d'aide à la navigation selon la revendication précédente, **caractérisé en ce qu'**on transmet la valeur de l'instant limite (tlim) au donneur d'ordre.

3. Procédé d'aide à la navigation selon l'une quelconque des revendications précédentes, **caractérisé en ce qu'**on transmet la valeur de l'instant limite d'extraction (tlimex) au donneur d'ordre.

4. Procédé d'aide à la navigation selon l'une quelconque des revendications précédentes, **caractérisé en ce que** les rayons de protection prédits (Rp(t)) sur la trajectoire à venir sont prédéterminés.

5. Procédé d'aide à la navigation selon l'une quelconque des revendications 1 à 3, **caractérisé en ce que** les rayons de protection prédits (Rp(t)) sur la trajectoire à venir sont calculés à l'instant donné (tc).

6. Procédé d'aide à la navigation selon l'une quelconque des revendications précédentes, **caractérisé en ce que** la situation critique est une situation dans laquelle l'information de navigation par satellites est perdue à partir de l'instant de calcul (tc).

7. Procédé d'aide à la navigation selon la revendication précédente, **caractérisé en ce qu'**on estime les rayons de protection prédits (Rp(t)) par propagation des erreurs inertielles sur la trajectoire à venir.

8. Procédé d'aide à la navigation selon l'une quelconque des revendications précédentes, **caractérisé en ce que** la trajectoire à venir est la portion restante de la trajectoire prédéterminée à l'instant de calcul (tc)

9. Procédé d'aide à la navigation selon l'une quelconque des revendications 1 à 8, **caractérisé en ce que** la trajectoire à venir est la trajectoire, débutant à l'instant de calcul (tc), la plus contraignante pour la situation critique considérée.

10. Procédé d'aide à la navigation selon l'une quelconque des revendications précédentes, **caractérisé en ce que** les rayons de protection prédits sont calculés à partir de rayons de protection horizontaux prédits et/ou verticaux prédits sur la trajectoire à venir.

11. Procédé d'aide à la navigation selon l'une quelconque des revendications précédentes, **caractérisé en ce que** la limite d'alarme (Rlim) est calculée pour un premier niveau d'intégrité, les rayons de protection (R(t)) sont calculés pour un second niveau d'intégrité, les rayons de protection prédits (Rp(t)) sont calculés pour un troisième niveau d'intégrité et **en ce que** le second niveau d'intégrité est au moins égal au premier niveau d'intégrité et le troisième niveau d'intégrité est soit égal au premier niveau d'intégrité, soit égal au second niveau d'intégrité, soit dépendant de l'intégrité liée à la situation critique considérée.

12. Procédé d'aide à la navigation selon l'une quelconque des revendications précédentes, **caractérisé en ce que** le système de navigation est du type hybride.

13. Procédé d'aide à la navigation selon la revendication précédente, **caractérisé en ce que** le donneur d'ordre est un pilote ou un système de pilotage automatique.

14. Système de navigation apte à mettre en oeuvre le procédé selon l'une quelconque des revendications précédentes.

15. Aéronef équipé d'un système de navigation selon la revendication précédente.

## Patentansprüche

1. Navigationshilfeverfahren zur Bestimmung der Bahn eines Luftfahrzeugs durch einen Befehlsgeber, die anfänglich einer in einer Annäherungsphase vorbestimmten Bahn folgen und auf der eine Sicherheitshöhe (hsécu) und eine Alarmgrenze (Rlim(t)) definiert sind, wobei das Luftfahrzeug ein Navigationssystem vom Typ INS/GNSS umfasst, das einen Navigationsempfänger über Satelliten und mindestens eine Trägheitszentrale umfasst, wobei das Verfahren die folgenden Schritte umfasst:
- Bestimmung einer zukünftigen Bahn,
- Abschätzung von auf der zukünftigen Bahn prognostizierten Schutzradien (Rp(t)) zu Beginn des Berechnungszeitpunkts (tc) im Fall einer positionsinformationsmäßig kritischen Situation zu Beginn des Berechnungszeitpunkts (tc),
**dadurch gekennzeichnet, dass** das Verfahren ferner die folgenden Schritte umfasst:
- Berechnung eines Grenzzeitpunkts (tlim), ab dem der prognostizierte Schutzradius (Rp(t)) größer oder gleich der Alarmgrenze (Rlim(t)) ist,
- Berechnung eines Extraktionsgrenzzeitpunkts (tlimex), der dem maximalen Zeitpunkt entspricht, zu dem das Luftfahrzeug die vorbestimmte Bahn verlassen muss, um zum Grenzzeitpunkt (tlim) die Sicherheitshöhe (hsécu) erreichen zu können.

2. Navigationshilfeverfahren nach vorangehendem Anspruch, **dadurch gekennzeichnet, dass** der Wert des Grenzzeitpunkts (tlim) an den Befehlsgeber übertragen wird.

3. Navigationshilfeverfahren nach einem der vorangehenden Ansprüche, **dadurch gekennzeichnet, dass** der Wert des Extraktionsgrenzzeitpunkts (tlimex) an den Befehlsgeber übertragen wird.

4. Navigationshilfeverfahren nach einem der vorangehenden Ansprüche, **dadurch gekennzeichnet, dass** die prognostizierten Schutzradien (Rp(t)) auf der zukünftigen Bahn vorbestimmt sind.

5. Navigationshilfeverfahren nach einem der Ansprüche 1 bis 3, **dadurch gekennzeichnet, dass** die prognostizierten Schutzradien (Rp(t)) auf der zukünftigen Bahn zum gegebenen Zeitpunkt (tc) berechnet sind.

6. Navigationshilfeverfahren nach einem der vorangehenden Ansprüche, **dadurch gekennzeichnet, dass** die kritische Situation eine Situation ist, in der die Navigationsinformation durch Satelliten ab dem Berechnungszeitpunkt (tc) verloren ist.

7. Navigationshilfeverfahren nach vorangehendem Anspruch, **dadurch gekennzeichnet, dass** die prognostizierten Schutzradien (Rp(t)) durch Ausbreitung der Trägheitsfehler auf der zukünftigen Bahn geschätzt werden.

8. Navigationshilfeverfahren nach einem der vorangehenden Ansprüche, **dadurch gekennzeichnet, dass** die zukünftige Bahn der zum Berechnungszeitpunkt (tc) restliche Abschnitt der vorbestimmten Bahn ist.

9. Navigationshilfeverfahren nach einem der Ansprüche 1 bis 8, **dadurch gekennzeichnet, dass**, beginnend zum Berechnungszeitpunkt (tc), die zukünftige Bahn die für die betrachtete kritische Situation zwingendste Bahn ist.

10. Navigationshilfeverfahren nach einem der vorangehenden Ansprüche, **dadurch gekennzeichnet, dass** die prognostizierten Schutzradien aus auf der zukünftigen Bahn prognostizierten horizontalen und/oder prognostizierten vertikalen Schutzradien berechnet werden.

11. Navigationshilfeverfahren nach einem der vorangehenden Ansprüche, **dadurch gekennzeichnet, dass** die Alarmgrenze (Rlim) für ein erstes Integritätsniveau berechnet ist, die Schutzradien (R(t)) für ein zweites Integritätsniveau berechnet sind, die prognostizierten Schutzradien (Rp(t)) für ein drittes Integritätsniveau berechnet sind und dass das zweite Integritätsniveau mindestens gleich dem ersten Integritätsniveau ist und das dritte Integritätsniveau entweder gleich dem ersten Integritätsniveau oder gleich dem zweiten Integritätsniveau ist oder von der Integrität abhängt, die mit der betrachteten kritischen Situation verbunden ist.

12. Navigationshilfeverfahren nach einem der vorangehenden Ansprüche, **dadurch gekennzeichnet, dass** das Navigationssystem vom Hybridtyp ist.

13. Navigationshilfeverfahren nach vorangehendem Anspruch, **dadurch gekennzeichnet, dass** der Befehlsgeber ein Pilot oder ein automatisches Lenksystem ist.

14. Navigationssystem, das imstande ist, das Verfahren nach einem der vorangehenden Ansprüche umzusetzen.

15. Luftfahrzeug, das mit einem Navigationssystem nach vorangehendem Anspruch ausgestattet ist.

## Claims

1. A navigation assistance method for determining, via an orderer, the path of an aircraft initially following a predetermined path during an approach phase and on which a safety altitude (hsécu) and a warning limit (Rlim(t)) are defined, said aircraft comprising a navigation system of the INS/GNSS type comprising a satellite navigation receiver and at least one inertial unit, said method comprising the following steps:
- determining a future path;
- estimating predicted protection radii (Rp(t)) on the future path starting from the calculation instant (tc) in the event of a critical situation, in terms of position information, that will start at the calculation instant (tc),
**characterised in that** said method further comprises the following steps:
- calculating a limit instant (tlim) from which said predicted protection radius (Rp(t)) is greater than or equal to said warning limit (Rlim(t));
- calculating an extraction limit instant (tlimex) that corresponds to the maximum instant at which said aircraft must leave the predetermined path in order to reach said safety altitude (hsécu) at said limit instant (tlim).

2. The navigation assistance method according to the preceding claim, **characterised in that** the value of the limit instant (tlim) is transmitted to the orderer.

3. The navigation assistance method according to any one of the preceding claims, **characterised in that** the extraction limit instant (tlimex) value is transmitted to the orderer.

4. The navigation assistance method according to any one of the preceding claims, **characterised in that** said predicted protection radii (Rp(t)) on the future path are predetermined.

5. The navigation assistance method according to any one of claims 1 to 3, **characterised in that** said predicted protection radii (Rp(t)) on the future path are calculated at the given instant (tc).

6. The navigation assistance method according to any one of the preceding claims, **characterised in that** the critical situation is a situation during which the satellite navigation information is lost from the calculation instant (tc).

7. The navigation assistance method according to the preceding claim, **characterised in that** said predicted protection radii (Rp(t)) are estimated by propagation of the inertial errors on the future path.

8. The navigation assistance method according to any one of the preceding claims, **characterised in that** the future path is the remaining portion of the predetermined path at the calculation instant (tc).

9. The navigation assistance method according to any one of claims 1 to 8, **characterised in that** the future path is the path, starting at the calculation instant (tc), that is most restrictive for the considered critical situation.

10. The navigation assistance method according to any one of the preceding claims, **characterised in that** said predicted protection radii are calculated from predicted horizontal and/or predicted vertical protection radii on the future path.

11. The navigation assistance method according to any one of the preceding claims, **characterised in that** said warning limit (Rlim) is calculated for a first level of integrity, said protection radii (R(t)) are calculated for a second level of integrity, said predicted protection radii (Rp(t)) are calculated for a third level of integrity, and **in that** said second level of integrity is at least equal to said first level of integrity and said third level of integrity is either equal to said first level of integrity or equal to said second level of integrity or is dependent on the integrity associated with the considered critical situation.

12. The navigation assistance method according to any one of the preceding claims, **characterised in that** said satellite navigation system is of the hybrid type.

13. The navigation assistance method according to the preceding claim, **characterised in that** the orderer is a pilot or an automatic pilot system.

14. A navigation system designed to implement the method according to any one of the preceding claims.

15. An aircraft provided with a navigation system according to the preceding claim.
